# EUROPEAN PATENT APPLICATION

(11) **EP 4 786 218 A1**
(43) Date of publication of application: **05.08.2026**
(21) Application number: 24870592.3
(22) Date of filing: 20.09.2024
(51) Int. Cl.: B60H 1/00

(54) **HEATING, VENTILATION AND/OR AIR CONDITIONING APPARATUS, AND VEHICLE**

(30) Priority: 28.09.2023 CN 202322682592 U
(71) Applicant: Valeo Electrification, 95892 Cergy Pontoise (FR)
(72) Inventor: XIAO, Yu, Jingzhou, Hubei 434000 (CN); BAO, Tao, Jingzhou, Hubei 434000 (CN)
(74) Representative: Valeo Powertrain Systems
(86) International application number: PCT/CN2024/119928
(87) International publication number: WO 2025/067048

(57) **Abstract**

A heating, ventilation and/or air conditioning apparatus (100), and a vehicle comprising a heating, ventilation and/or air conditioning apparatus (100), said apparatus comprising: a housing (10); a heat exchanger (30), which is disposed in the housing (10) and configured to allow a flow of air (F) to pass therethrough, the housing (10) being provided, downstream from the heat exchanger (30), with an upper space (S1), a lower space (S2), and a first outlet (11) for use in the lower space (S2); and a barrel damper (20), the barrel damper (20) being capable of rotating about a rotation axis (X) to at least a first position and a second position. In the first position, the barrel damper (20) opens the first outlet (11) and separates the upper space (S1) and the lower space (S2); in the second position, the barrel damper (20) closes the first outlet (11) and allows the upper space (S1) and the lower space (S2) to communicate with one another.

## Description

### Technical Field

The present disclosure relates to a heating, ventilation and/or air conditioning apparatus. In particular, the heating, ventilation and/or air conditioning apparatus is capable of operably splitting levels by means of a barrel-shaped air flap. The present disclosure further relates to a vehicle comprising such a heating, ventilation and/or air conditioning apparatus.

### Background Art

Vehicles regulate the environment inside the vehicle cabin by means of a heating, ventilation and/or air conditioning apparatus. As is known, the heating, ventilation and/or air conditioning apparatus may have a split-level structure, in order to separate the airflows blowing out of the air outlets, to adapt to different environment regulation demands in different parts of the cabin interior. In such a split-level structure, different levels are connected or separated by means of air flaps, and the air outlets are separated to different levels by the air flaps.

In a heating, ventilation and/or air conditioning apparatus in the prior art, the use of butterfly air flaps to connect or separate different levels of the split-level structure is known. However, when used for level separation, the structure of the butterfly air flaps places limits on the positions where the butterfly air flaps themselves and also the air outlets can be arranged, and causes them to have a large range requirement during operation. As a result, they take up space inside the cabin, making the design and arrangement of other components inside the cabin difficult.

### Summary of the Disclosure

Thus, the present disclosure aims to solve the abovementioned problem, the objective thereof being to provide a heating, ventilation and/or air conditioning apparatus that reduces the amount of space taken up by air outlets and air flaps used for a split-level structure thereof, facilitating the design and arrangement of other components inside the cabin.

The abovementioned objective is achieved by means of a heating, ventilation and/or air conditioning apparatus according to an embodiment of the present disclosure, comprising: a housing; a heat exchanger, arranged in the housing and configured to allow an airflow to pass through, wherein, downstream of the heat exchanger, the housing has an upper-level space, a lower-level space, and a first outlet for the lower-level space; a barrel-shaped air flap, the barrel-shaped air flap being able to rotate about a rotation axis to at least a first position and a second position; at the first position, the barrel-shaped air flap opens the first outlet, and separates the upper-level space from the lower-level space; at the second position, the barrel-shaped air flap closes the first outlet, and connects the upper-level space to the lower-level space.

An objective of the present disclosure is to provide a heating, ventilation and/or air conditioning apparatus, such that air outlets and air flaps for connecting and separating a split-level structure thereof take up less space, and will not make the design and arrangement of the cabin difficult. The heating, ventilation and/or air conditioning apparatus according to the present disclosure enables the upper-level space and lower-level space to be connected and separated by means of the barrel-shaped air flap, while also enabling the first outlet for the lower level to be opened and closed. Compared with a butterfly air flap, the position where the barrel-shaped air flap and the first outlet are arranged in the heating, ventilation and/or air conditioning apparatus is different, and the barrel-shaped air flap has a smaller range requirement during operation, so is able to leave space in the cabin for arranging other components, reducing the difficulty of design.

The heating, ventilation and/or air conditioning apparatus according to the present disclosure may also have one or more of the following features individually or in combination.

According to an optional embodiment of the present disclosure, the barrel-shaped air flap has a first edge and a second edge which are at an angle to each other with respect to the rotation axis, and a housing part arranged between the first edge and the second edge, the housing part defining an air flap channel from the first edge to the second edge. As a result of comprising the air flap channel allowing an airflow to pass through, the position where the barrel-shaped air flap is arranged in the heating, ventilation and/or air conditioning apparatus can be chosen with greatly increased freedom.

According to an optional embodiment of the present disclosure, the position of the first outlet is configured to be located above a height of the first edge when at the first position. In an existing heating, ventilation and/or air conditioning apparatus in which levels are split by means of a butterfly air flap, an outlet for a lower level is arranged below a height of the butterfly air flap; as a result, the profile of a lower part of the heating, ventilation and/or air conditioning apparatus is larger, and takes up space in a lower part of the cabin. Conversely, in the heating, ventilation and/or air conditioning apparatus according to the present disclosure, the first outlet for the lower-level space has a relatively high position, so can reduce the profile of a lower part of the heating, ventilation and/or air conditioning apparatus, leaving space in a lower part of the cabin, so that this can be used to arrange other components.

According to an optional embodiment of the present disclosure, at the first position, the housing part separates the upper-level space from the lower-level space, and the air flap channel allows the airflow to flow toward the first outlet from the lower-level space; at the second position, the housing part closes the first outlet, and the air flap channel allows the airflow to flow between the upper-level space and the lower-level space. According to this feature, the barrel-shaped air flap blocks the flow of airflow by means of the housing part, and provides a channel allowing airflow to flow by means of the air flap channel.

According to an optional embodiment of the present disclosure, at the first position, under the guidance of the air flap channel, the airflow is diverted upward after passing through the heat exchanger, to flow toward the first outlet. Thus, the air flap channel provides a flow channel from the heat exchanger to the first outlet located at a high position, avoiding a rise in airflow resistance due to the elevated height of the first outlet.

According to an optional embodiment of the present disclosure, the barrel-shaped air flap is also able to rotate about the rotation axis (X) to an intermediate position located between the first position and the second position; at the intermediate position, the barrel-shaped air flap opens the first outlet, and connects the upper-level space to the lower-level space.

According to an optional embodiment of the present disclosure, the housing has a first protruding edge and a second protruding edge; and at the first position, the first edge abuts the first protruding edge in a sealed manner, and the second edge abuts the second protruding edge in a sealed manner.

According to an optional embodiment of the present disclosure, the housing also has a third protruding edge, the first outlet being located between the second protruding edge and the third protruding edge; and at the second position, the first edge abuts the second protruding edge in a sealed manner, and the second edge abuts the third protruding edge in a sealed manner.

According to this feature, at different positions of the barrel-shaped air flap, the two edges thereof can individually abut the first to third protruding edges of the housing in a sealed manner, ensuring sealed contact between the barrel-shaped air flap and the housing.

According to an optional embodiment of the present disclosure, the first outlet comprises a foot-blowing outlet.

According to an optional embodiment of the present disclosure, the housing also has a second outlet located in the upper-level space.

According to an optional embodiment of the present disclosure, the second outlet comprises a face-blowing outlet and/or a defrosting outlet.

The present disclosure further provides a vehicle, which a heating, ventilation and/or air conditioning apparatus as described above.

### Brief Description of the Drawings

The foregoing and other features and advantages of the present disclosure will become more apparent from the following detailed description of exemplary embodiments with reference to the drawings, and the description and the drawings are for illustrative purposes only and are not intended to limit the scope of the present disclosure in any way. The drawings below are not drawn to scale according to actual dimensions but rather focus on showing the main purpose of the present disclosure. In the figures:
Fig. 1 is a schematic plan showing a heating, ventilation and/or air conditioning apparatus according to an exemplary embodiment, with the barrel-shaped air flap at the first position.
Fig. 2 is a schematic plan showing a heating, ventilation and/or air conditioning apparatus according to an exemplary embodiment, with the barrel-shaped air flap at the second position.
Fig. 3 is a schematic plan showing a heating, ventilation and/or air conditioning apparatus according to an exemplary embodiment, with the barrel-shaped air flap at a third position.
Fig. 4 shows a three-dimensional schematic drawing of the barrel-shaped air flap in a heating, ventilation and/or air conditioning apparatus according to an exemplary embodiment.

### Detailed Description of Embodiments

To clarify the objective, technical solutions and advantages of embodiments of the present disclosure, the technical solutions of embodiments of the present disclosure are described clearly and completely below in conjunction with the drawings of embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. Words such as "comprise" or "include" mean that the element or object appearing before the word encompasses the elements or objects and their equivalents listed after the word, without excluding other elements or objects. Although expressions such as "first" and "second" are used to describe various elements of the present disclosure, they are only intended to distinguish one component from another, rather than limiting the sequence or importance of the corresponding elements. Without departing from the scope of the present disclosure, "first component" may be written as "second component", and, similarly, "second component" may be written as "first component".

In the description of the present disclosure, it is necessary to understand that the orientation or position relationship indicated by a term such as "up", "down", "left", "right", "inside", and "outside" is based on the orientation or position relationship shown in the drawings, or the orientation or position relationship of usual placement when the disclosed product is in use, or the orientation or position relationship that is commonly understood by those skilled in the art, and is only for the convenience of describing the present disclosure and simplifying the description, rather than indicating or implying that the device or element referred to must have a specific orientation or be constructed and operated in a specific orientation, so must not be construed as limiting the present disclosure.

For ease of description, the drawings of the disclosure correspondingly simplify or omit components irrelevant to the description of the disclosure. These omitted or simplified components do not affect the understanding of the content of the present disclosure by a person skilled in the art.

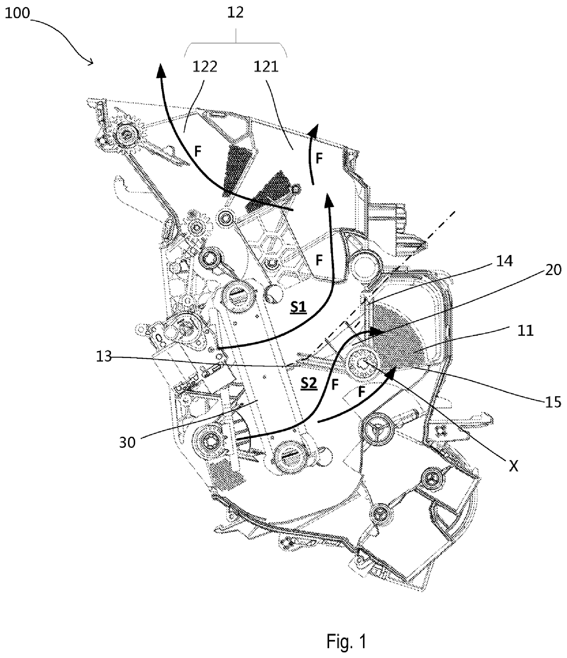

As shown in Figs. 1 - 3, the present disclosure proposes a heating, ventilation and/or air conditioning apparatus 100, which may for example be used in a vehicle, e.g. a motor vehicle, an electric vehicle or a hybrid vehicle. The heating, ventilation and/or air conditioning apparatus 100 comprises a housing 10 and various members arranged in the housing 10. The present disclosure aims to enable, through the cooperation of the housing 10 and the various components, a desired airflow to reach a desired outlet according to actual needs, so as to meet the requirements of a driver and passengers in a cabin of the vehicle for control and regulation of air and temperature inside the vehicle cabin, and can at the same time reduce the amount of energy supplied to the heating, ventilation and/or air conditioning apparatus 100 - this is especially important when the apparatus is used in an electric or hybrid vehicle.

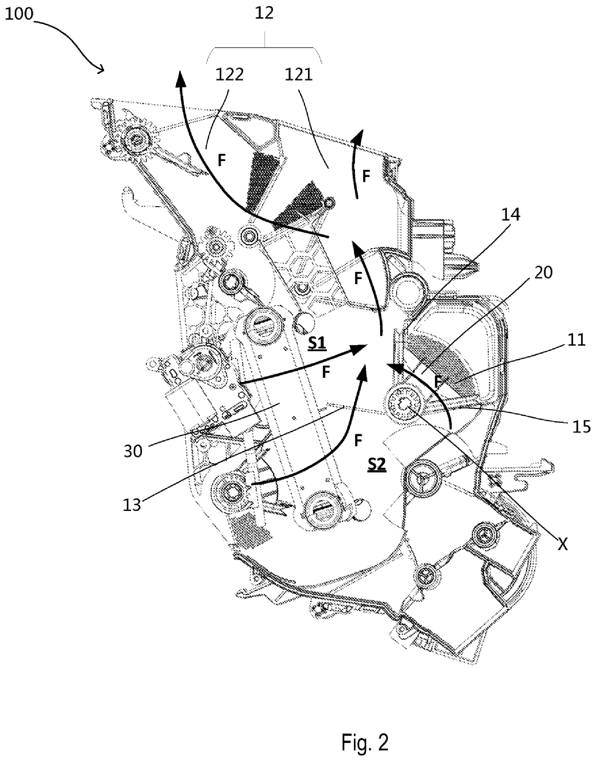

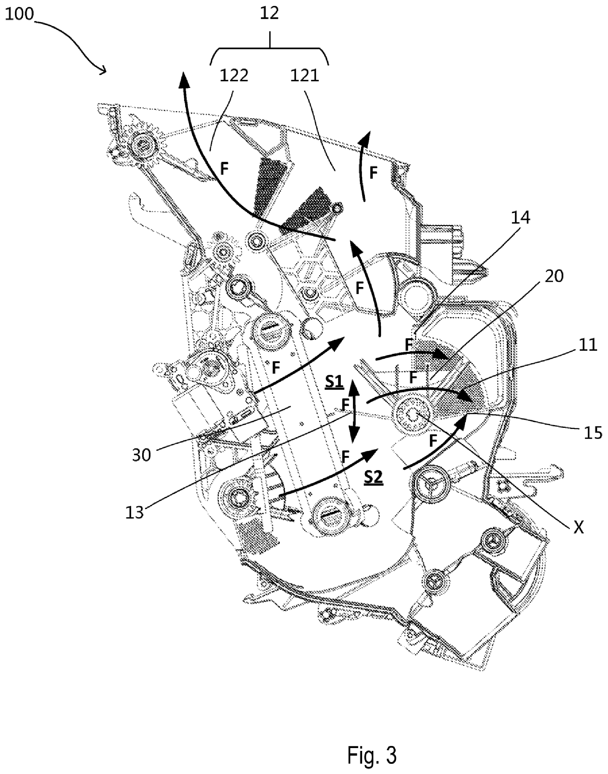

As shown in Figs. 1 - 3, the heating, ventilation and/or air conditioning apparatus 100 proposed in the present disclosure comprises a housing 10, a heat exchanger 30 arranged in the housing 10 and configured to allow an airflow F to pass through, and a barrel-shaped air flap 20. Downstream of the heat exchanger 30, the housing 10 has an upper-level space S1, a lower-level space S2, a first outlet 11 for the lower-level space S2, and a second outlet 12 for the upper-level space S1. Airflows F can flow out of the housing 10 through the first outlet 11 and the second outlet 12. The barrel-shaped air flap 20 can rotate about a rotation axis X to at least a first position (as shown in Fig. 1) and a second position (as shown in Fig. 2). At the first position, the barrel-shaped air flap 20 opens the first outlet 11, and separates the upper-level space S1 from the lower-level space S2. At the second position, the barrel-shaped air flap 20 closes the first outlet 11, and connects the upper-level space S1 to the lower-level space S2. The barrel-shaped air flap 20 can also rotate about the rotation axis X to an intermediate position between the first and second positions (as shown in Fig. 3). At the intermediate position, the barrel-shaped air flap 20 opens the first outlet 11, and connects the upper-level space S1 to the lower-level space S2.

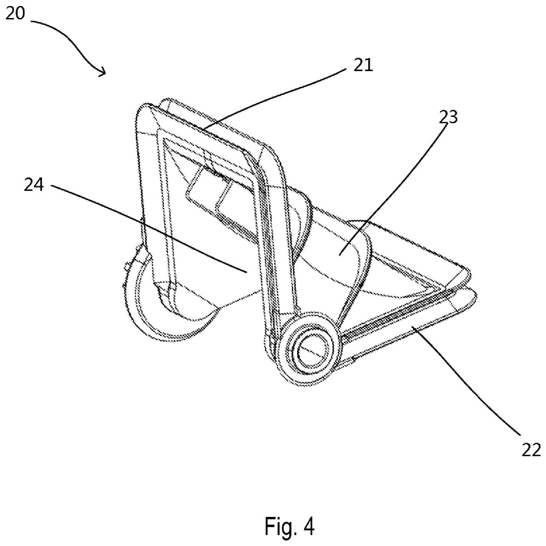

Fig. 4 shows the specific structure of the barrel-shaped air flap 20. As shown in the figure, the barrel-shaped air flap 20 comprises a first edge 21, a second edge 22, and a housing part 23 arranged between the first edge 21 and the second edge 22. The first edge 21 and the second edge 22 are arranged at an angle with respect to the rotation axis X. The housing part 23 defines an air flap channel 24 from the first edge 21 to the second edge 22. The barrel-shaped air flap 20 is able to block, by means of the housing part 23, an airflow from flowing into the air flap channel 24 from a position outside the first edge 21 and the second edge 22, and also allows, by means of the air flap channel 24, an airflow to flow between the first edge 21 and the second edge 22.

A first protruding edge 13, a second protruding edge 14 and a third protruding edge 15 are provided on the housing 10. The first protruding edge 13, the second protruding edge 14 and the third protruding edge 15 are also substantially arranged at angles around the rotation axis X, wherein a channel connecting the upper-level space S1 and the lower-level space S2 is located between the first protruding edge 13 and the second protruding edge 14, and the first outlet 11 is located between the second protruding edge 14 and the third protruding edge 15. The above-described protruding edge structure of the housing 10 corresponds to the structure of the barrel-shaped air flap 20. The first edge 21 and second edge 22 of the barrel-shaped air flap 20 can individually abut the protruding edges at different positions, to enhance sealing between the barrel-shaped air flap and the housing 10.

Specifically, at the first position, as shown in Fig. 1, the first edge 21 of the barrel-shaped air flap 20 abuts the first protruding edge 13 in a sealed manner, and the second edge 22 abuts the second protruding edge 14 in a sealed manner. The upper-level space S1 and the lower-level space S2 are separated by the housing part 23 of the barrel-shaped air flap 20, and the first outlet 11 is in an open state. An airflow F cannot flow into the lower-level space S2 from the upper-level space S1, so an airflow F flowing out of the first outlet 11 comes from the lower-level space S2 only. Moreover, an airflow F cannot flow into the upper-level space S1 from the lower-level space S2, so an airflow F flowing out of the second outlet 12 comes from the upper-level space S2 only. In this case, the heating, ventilation and/or air conditioning apparatus 100 is operating in its split-level mode.

Due to the structure of the barrel-shaped air flap 20, specifically the angled arrangement thereof, the separation between the upper-level space S1 and the lower-level space S2 which the housing part 23 achieves is angled upward. The upward-angled separation between the upper-level space S1 and the lower-level space S2 is roughly indicated by a dotted line in Fig. 1. This upward-angled separation allows the height of the first outlet 11 for the lower-level space S2 to be elevated. Referring to Fig. 1, the position of the first outlet 11 is above the height of the first edge 21 of the barrel-shaped air flap 20, being approximately coincident with the height of the housing part 23. The elevated height of the first outlet 11 allows the profile of a lower part of the housing 10 to be reduced in size, thus reducing the amount of space taken up the heating, ventilation and/or air conditioning apparatus 100 in a lower part of the cabin.

As shown in Fig. 1, in the lower-level space S2, under the guidance of the air flap channel 24 of the barrel-shaped air flap 20, an airflow F is diverted upward after passing through the heat exchanger 30, and flows toward the first outlet 11. The air flap channel 24 forms an airflow channel from the lower-level space S2 to the first outlet 11, and its upward-angled direction is especially well adapted to the elevated height of the first outlet 11. In addition, an airflow F can also cross the third protruding edge 15 to flow into the first outlet 11 from the lower-level space S2.

At the second position, as shown in Fig. 2, the first edge 21 of the barrel-shaped air flap 20 abuts the second protruding edge 14 in a sealed manner, and the second edge 22 abuts the third protruding edge 15 in a sealed manner. The upper-level space S1 and the lower-level space S2 are connected, and the first outlet 11 is closed by the housing part 23 of the barrel-shaped air flap 20. The air flap channel 24 of the barrel-shaped air flap 20 forms a connecting channel between the upper-level space S1 and the lower-level space S2, allowing an airflow F to flow between the upper-level space S1 and the lower-level space S2. In addition, an airflow F can also cross the first protruding edge 13 to flow between the upper-level space S1 and the lower-level space S2. In this case, the heating, ventilation and/or air conditioning apparatus 100 is operating in combination mode.

In the embodiment shown in Fig. 2, the first outlet 11 is the only outlet for the lower-level space S2. Once the first outlet 11 has been closed, even if an airflow F flows into the lower-level space S2 from the upper-level space S, it will not be able to flow out of the lower-level space S2; however, an airflow F flowing into the upper-level space S1 from the lower-level space S2 can flow out of the second outlet 12. Accordingly, Fig. 2 only depicts an airflow F flowing into the upper-level space S1 from the lower-level space S2.

It should be noted that another outlet for the lower-level space S2 could also be provided in the housing 10 of the heating, ventilation and/or air conditioning apparatus 100 according to the present disclosure. In such an embodiment, even if the first outlet 11 is closed, an airflow F will still be able to flow out of the lower-level space S2 through the other outlet, and flow out through the other outlet after flowing into the lower-level space S2 from the upper-level space S1. Airflows flowing out of the second outlet 12 and the other outlet may both be mixed airflows of the upper-level space S1 and the lower-level space S2.

At the intermediate position, as shown in Fig. 3, neither of the two edges of the barrel-shaped air flap 20 abuts any of the protruding edges of the housing; the upper-level space S1 and the lower-level space S2 are connected, and the first outlet 11 is open. An airflow F can flow between the upper-level space S1 and the lower-level space S2. As shown in Fig. 3, in addition to flowing out of the upper-level space S1 through the second outlet 12 and flowing out of the lower-level space S2 through the first outlet 11, an airflow F can also flow into the lower-level space S2 from the upper-level space S1 and out through the first outlet 11, and flow into the upper-level space S1 from the lower-level space S2 and out through the second outlet 12. In this case, the heating, ventilation and/or air conditioning apparatus 100 is operating in combination mode.

Thus, in the heating, ventilation and/or air conditioning apparatus 100 for a vehicle as proposed in the present disclosure, the split-level mode of the heating, ventilation and/or air conditioning apparatus 10 can be realized by using the barrel-shaped air flap 20 to achieve the connection or separation of the upper-level space and the lower-level space, and the opening or closing of the first outlet for the lower-level space; moreover, the relative positions of the barrel-shaped air flap and the first outlet are adjusted, reducing the profile of a lower part of the heating, ventilation and/or air conditioning apparatus 10, leaving space in a lower part of the cabin to facilitate the arrangement of other components.

It should be noted that the abovementioned structures of the first edge 21, second edge 22 and housing part 23 of the barrel-shaped air flap 20 and the first protruding edge 13, second protruding edge 14 and third protruding edge 15 of the housing 10 are merely schematic, and other structures satisfying the abovementioned cooperative relationships are also within the scope of protection of the present application.

Optionally, the first outlet 11 for the lower-level space S2 may be a foot-blowing outlet, and the second outlet 12 for the upper-level space S1 may comprise a face-blowing outlet 121 and/or a defrosting outlet 122. In the split-level mode of the heating, ventilation and/or air conditioning apparatus 100, an airflow F entering the upper-level space S1 through the heat exchanger 30 may come from external fresh air alone, and an airflow F entering the lower-level space S2 may come from internally circulated air alone. The external fresh air blown out of the defrosting outlet 122 is typically relatively dry, so can achieve defrosting quickly. The external fresh air blown out of the face-blowing outlet 121 can also increase the oxygen content of air in an upper part of the cabin quickly, allowing the driver and passengers to feel the freshness of the air. Compared with the head and face, the feet of the human body are more sensitive to low temperature. The internally circulated air blown out of the first outlet 11 is at a higher temperature, so is able to increase the temperature in the vicinity of the feet quickly with lower energy consumption, so that the body feels comfortable.

The above are merely demonstrative embodiments of the present disclosure, and are not intended to limit the protection scope of the present disclosure, which is determined by the appended claims. Those skilled in the art will understand that changes and improvements can be made to the various embodiments described herein, without departing from the scope of the present disclosure as defined in the appended claims. In addition, for clarity and conciseness, descriptions of familiar functions and structures may be omitted.

Finally, it should also be understood that certain technical features in the embodiments might not be necessary for solving a specific technical problem, so these technical features could be absent or omitted without affecting the solution of the technical problem or the formation of the technical solution; furthermore, features, elements and/or functions of one embodiment could be suitably combined, integrated or coordinated with features, elements and/or functions of one or more other embodiments, unless such combination, integration or coordination cannot be implemented.

## Claims

1. A heating, ventilation and/or air conditioning apparatus (100), **characterized in that** the heating, ventilation and/or air conditioning apparatus (100) comprises:
a housing (10);
a heat exchanger (30), arranged in the housing (10) and configured to allow an airflow (F) to pass through, wherein, downstream of the heat exchanger (30), the housing (10) has an upper-level space (S1), a lower-level space (S2), and a first outlet (11) for the lower-level space (S2);
a barrel-shaped air flap (20), the barrel-shaped air flap (20) being able to rotate about a rotation axis (X) to at least a first position and a second position; at the first position, the barrel-shaped air flap (20) opens the first outlet (11), and separates the upper-level space (S1) from the lower-level space (S2); at the second position, the barrel-shaped air flap (20) closes the first outlet (11), and connects the upper-level space (S1) to the lower-level space (S2).

2. The heating, ventilation and/or air conditioning apparatus (100) as claimed in claim 1, **characterized in that**
the barrel-shaped air flap (20) has a first edge (21) and a second edge (22) which are at an angle to each other with respect to the rotation axis (X), and a housing part (23) arranged between the first edge (21) and the second edge (22), the housing part (23) defining an air flap channel (24) from the first edge (21) to the second edge (22).

3. The heating, ventilation and/or air conditioning apparatus (100) as claimed in claim 2, **characterized in that**
the position of the first outlet (11) is configured to be located above a height of the first edge (21) when at the first position.

4. The heating, ventilation and/or air conditioning apparatus (100) as claimed in claim 2, **characterized in that**
at the first position, the housing part (23) separates the upper-level space (S1) from the lower-level space (S2), and the air flap channel (24) allows the airflow to flow toward the first outlet (11) from the lower-level space (S2);
at the second position, the housing part (23) closes the first outlet (11), and the air flap channel (24) allows the airflow to flow between the upper-level space (S1) and the lower-level space (S2).

5. The heating, ventilation and/or air conditioning apparatus (100) as claimed in claim 2, **characterized in that**, at the first position, under the guidance of the air flap channel (24), the airflow is diverted upward after passing through the heat exchanger (30), to flow toward the first outlet (11).

6. The heating, ventilation and/or air conditioning apparatus (100) as claimed in any one of claims 1 - 5, **characterized in that**
the barrel-shaped air flap (20) is also able to rotate about the rotation axis (X) to an intermediate position located between the first position and the second position; at the intermediate position, the barrel-shaped air flap (20) opens the first outlet (11), and connects the upper-level space (S1) to the lower-level space (S2).

7. The heating, ventilation and/or air conditioning apparatus (100) as claimed in any one of claims 2 - 5, **characterized in that**
the housing (10) has a first protruding edge (13) and a second protruding edge (14), and
at the first position, the first edge (21) abuts the first protruding edge (13) in a sealed manner, and the second edge (22) abuts the second protruding edge (14) in a sealed manner.

8. The heating, ventilation and/or air conditioning apparatus (100) as claimed in claim 7, **characterized in that**
the housing (10) also has a third protruding edge (15), the first outlet (11) being located between the second protruding edge (14) and the third protruding edge (15), and
at the second position, the first edge (21) abuts the second protruding edge (14) in a sealed manner, and the second edge (22) abuts the third protruding edge (130) in a sealed manner.

9. The heating, ventilation and/or air conditioning apparatus (100) as claimed in any one of claims 1 - 5,
the first outlet (11) comprising a foot-blowing outlet (111).

10. The heating, ventilation and/or air conditioning apparatus (100) as claimed in any one of claims 1 - 5,
the housing (10) also having a second outlet (12) for use in the upper-level space (S1).

11. The heating, ventilation and/or air conditioning apparatus (100) as claimed in any one of claims 1 - 5,
the second outlet (12) comprising a face-blowing outlet (121) and/or a defrosting outlet (122).

12. A vehicle, **characterized by** comprising the heating, ventilation and/or air conditioning apparatus (100) as claimed in any one of claims 1 - 11.
